# EUROPEAN PATENT APPLICATION

(11) **EP 2 479 659 A2**
(43) Date of publication of application: **25.07.2012**
(21) Application number: 12150381.7
(22) Date of filing: 06.01.2012
(51) Int. Cl.: G06F 3/12

(54) **Input tray designation for separator pages in a print shop environment**

(30) Priority: 21.01.2011 US 201113010893
(71) Applicant: Ricoh Company, Ltd., Tokyo 143-8555 (JP)
(72) Inventor: Gaertner, Joseph, Boulder, CO 80301-9270 (US); Waller, Marquis, Boulder, CO 80301-9270 (US)
(74) Representative: White, Duncan Rohan

(57) **Abstract**

Systems and methods are provided that allow for printing of separator pages from designated input trays on printers of a print shop. One embodiment is a print server that receives an incoming print job directed to a printer, and identifies an input tray of the printer that has been designated for printing separator pages. The print server also generates a separator page with a property that directs the printer to print the separator page with media from the designated input tray, and transmits the separator page to the printer for printing from the designated input tray.

## Description

### Field of the Invention

The invention relates to the field of printing systems, and in particular, to separator pages generated by printing systems.

### Background

Print shops are typically medium or large scale facilities capable of supplying printing services to meet a variety of customer demands. For example, print shops are often used to print documents used for mass-mailing (e.g., customer bills, advertisements, etc). Because print shops engage in printing on a large scale that is hard for many offices to match, their customer base is usually varied. Print shop clients may therefore include both large institutional clients (e.g., credit card companies and banks), and small clients (e.g., small businesses and churches).

Print shops are generally arranged to print incoming jobs from clients in a way that is economical, yet fast. Thus, print shops often include a number of high-volume printers capable of printing incoming jobs quickly and at high quality. These printers may be managed by operators who can remove paper jams and reload the printers with media. Print shops also typically include post-printing devices that are used to process the printed documents of each job (e.g., stackers, staplers, cutters, binders, etc.). Because print shops serve a variety of clients, they are often tasked with printing jobs that have varying printing formats, delivery dates, and media requirements. Print shops therefore often use a centralized print server that coordinates activity between printers of the print shop and clients. The print server schedules incoming jobs and forwards them to the printers.

Jobs that are printed within a print shop may be physically separated with printed separator pages (also known as banner pages). Printed separator pages are placed between printed jobs to visually indicate the boundaries between printed jobs. Printed separator pages may also be used for temporary, in-house purposes such as identifying the time a job was printed from a printer, or identifying the client that requested the job.

### Summary

Embodiments described herein use designated input trays on printers to print separator pages. Once an input tray on a printer has been designated, separator pages are generated with a property that directs the printer to print them from the designated tray. When these separator pages are sent to the printer, they are then printed with media from the tray. Thus, a printer operator knows the media that the separator pages will be printed upon because the printer operator loads this media into the designated tray of the printer. The printer operator can then easily identify boundaries between printed jobs by spotting the media that has been loaded into the tray of the printer designated for separator pages. Furthermore, separator pages may be printed with any desired media type, including media types that are different from the print job itself.

One embodiment is a print server that generates separator pages. The print server is operable to manage one or more printers that may be in a print shop. The print server includes a control system operable to receive an incoming print job directed to a printer, and to identify an input tray of the printer designated for printing separator pages. The print server also includes a page generator operable to generate a separator page with a property that directs the printer to print the separator page with media from the designated input tray, and to transmit the separator page to the printer for printing from the designated input tray.

Another embodiment is a system for designating input trays of printers used to print separator pages. The system includes a print server operable to receive data from each one or more printers describing input trays that are available for printing, and to designate an input tray on each of the printers as a media source for separator pages. The system also includes a memory operable to store data that indicates the input tray on each printer that is designated for separator pages.

Other exemplary embodiments may be described below.

### Description of the Drawings

Some embodiments of the present invention are now described, by way of example only, and with reference to the accompanying drawings. The same reference number represents the same element or the same type of element on all drawings.
FIG. 1 is a block diagram illustrating a print shop architecture in an exemplary embodiment.
FIG. 2 is a block diagram of a print server in an exemplary embodiment.
FIG. 3 is a flowchart illustrating a method for generating separator pages in an exemplary embodiment.
FIG. 4 is a block diagram illustrating a system operable to designate printer input trays used for printing separator pages.
FIG. 5 illustrates a processing system operable to execute a computer readable medium embodying programmed instructions to perform desired functions in an exemplary embodiment.

### Detailed Description

The figures and the following description illustrate specific exemplary embodiments of the invention. It will thus be appreciated that those skilled in the art will be able to devise various arrangements that, although not explicitly described or shown herein, embody the principles of the invention and are included within the scope of the invention. Furthermore, any examples described herein are intended to aid in understanding the principles of the invention, and are to be construed as being without limitation to such specifically recited examples and conditions. As a result, the invention is not limited to the specific embodiments or examples described below, but by the claims and their equivalents.

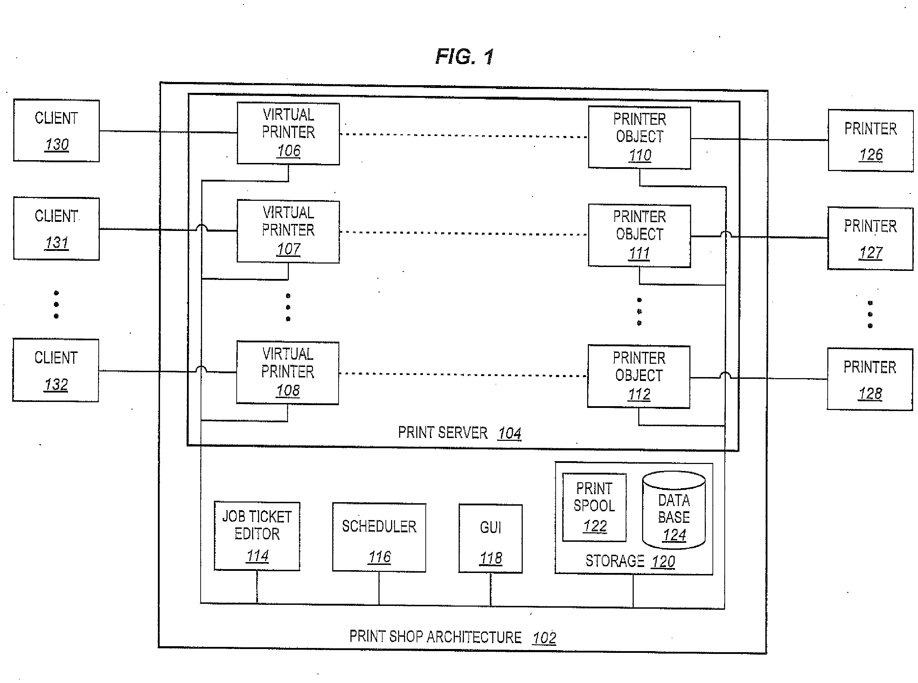

FIG. 1 is a block diagram illustrating a print shop architecture 102 in an exemplary embodiment. Print shop architecture 102 couples one or more clients 130-132 to one or more printers 126-128 to provide printing and print workflow services. Print shop architecture 102 is operable to receive print jobs from clients 130-132 for printing on printers 126-128. Clients 130-132 may include banks, credit card companies, or other entities with printing needs (e.g., monthly bank statements, monthly credit card bills, etc.). Print shop architecture 102 may receive print jobs from clients 130-132 in a number of different formats, such as Portable Document Format (PDF), Mixed Object: Document Content Architecture (MO:DCA), etc. Job tickets defining properties associated with the print data of the job may be received from clients 130-132 in a number of different formats, such as Job Definition Format (JDF), Print Production Format (PPF), Portable Job Ticket Format (PJTF), etc. Printers 126-128 generally include systems for transforming print data onto a suitable printable medium, such as paper, and generally are large, multi-tray production printing systems used for high volume printing.

Print shop architecture 102 includes a print server 104 having one or more virtual printers 106-108. Virtual printers 106-108 communicate with clients 130-132 and provide an interface similar to a printer driver to allow clients 130-132 to set up print jobs and send print jobs to print shop architecture 102. When clients 130-132 send print jobs to print shop architecture 102, the job tickets are scanned into a database 124 located in storage 120 of print shop architecture 102. The print jobs are then stored in a print spool 122 of storage 120 as open jobs prior to queuing the print jobs for printing. A scheduler 116 identifies the open jobs located in print spool 122 and attempts to schedule the jobs at a queue of one or more printer objects 110-112. Typically, scheduler 116 attempts to schedule the open jobs at one of printer objects 110-112 corresponding with virtual printers 106-108 that received the print job. For example, if client 130 transmitted the print job to virtual printer 106, then scheduler 116 may first attempt to place the print job at a print queue of printer object 110. Generally, printer objects 110-112 interface with corresponding printers 126-128 to queue and process print jobs prior to transmitting the jobs to printers 126-128.

A printer operator may use a user interface of print shop architecture 102 to control and identify the status of jobs at print shop architecture 102. For example, user interface 118 may provide a list of print jobs in queues of printer objects 110-112 and other general information about the status of open jobs in print spool 122.

The printer operator may also use a job ticket editor 114 to modify job tickets of both open and queued print jobs. Using job ticket editor 114, the printer operator may modify job tickets to change various print options for a print job, such as duplexing, stapling, media type, etc.

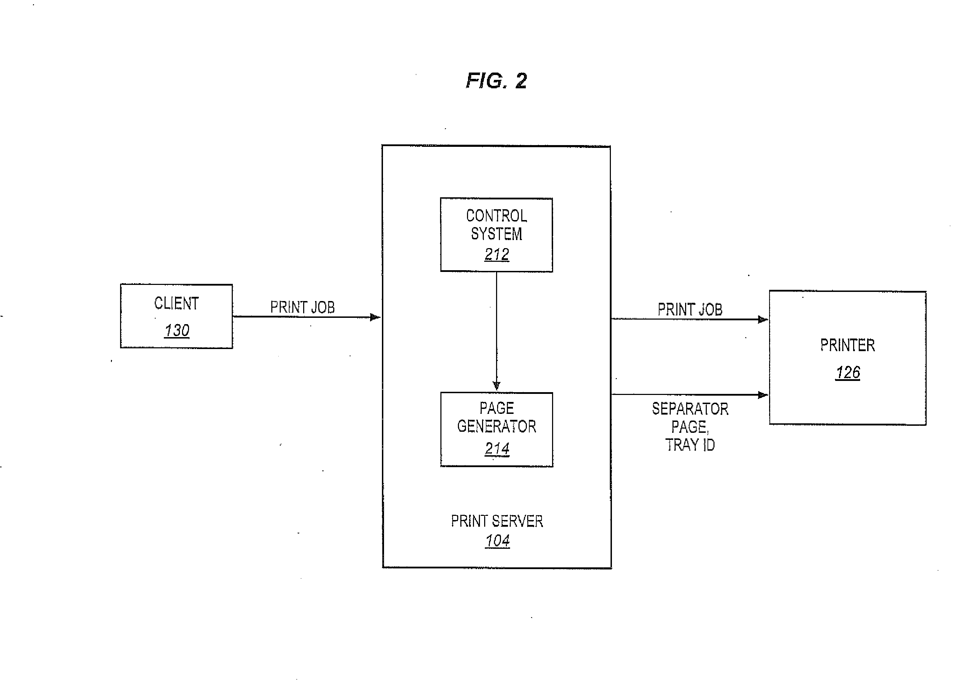

Print shop architecture 102 provides a number of printing and workflow services to clients 130-132 which will become more readily apparent through the following discussion and related figures. As printer object 110 receives incoming print jobs, it may also receive requests to generate separator pages. Separator pages include print data describing how a logical page is to be printed. Separator pages are generated internally by print server 104. When separator pages are printed, they do not form printed jobs, but are rather used to visually indicate the boundaries between printed jobs. Printers within print shop architecture 102 may each have a tray that has been designated by print server 104 for printing separator pages. FIG. 2, discussed below, describes a system capable of generating separator pages to be printed from a designated tray of a printer.

FIG. 2 is a block diagram of a print server 104 in an exemplary embodiment. Print server 104 is operable to direct a printer to print separator pages from a designated input tray. Print server 104 includes a control system 212 and a page generator 214. Control system 212 comprises any system, device, or component operable to identify which input tray on printer 126 has been designated for printing separator pages. Page generator 214 comprises any system, device, or component operable to generate a separator page that is printed from the designated input tray on printer 126. Control system 212 and page generator 214 may be implemented, for example, at printer object 110 of FIG. 1. Using the above components of print server 104, methods may be implemented to generate separator pages that will be printed with media from a chosen input tray on printer 126.

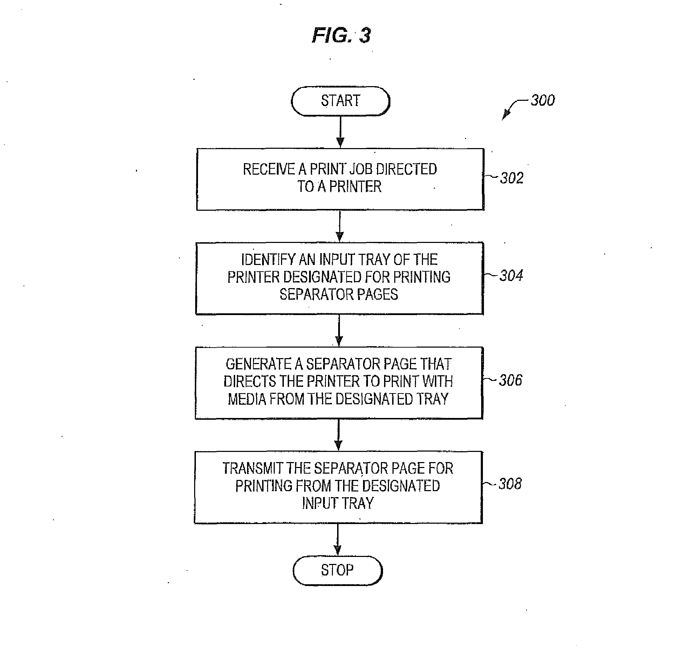

FIG. 3 is a flowchart illustrating a method 300 for generating separator pages in an exemplary embodiment. The steps of method 300 are described with reference to print server 104 of FIG. 2, but those skilled in the art will appreciate that method 300 may be performed in other systems or devices. The steps of the flowcharts described herein are not all inclusive and may include other steps not shown. The steps described herein may also be performed in an alternative order.

In step 302, control system 212 receives a print job directed to printer 126. A print job comprises print data and properties associated with the print data (e.g., a job ticket indicating the media type for the print job, the number of logical pages in the print job, a request for a separator page, etc.). Control system 212 may determine that a print job is directed to printer 126 by analyzing the properties of the job.

In step 304, control system 212 identifies an input tray on printer 126 designated for printing separator pages. Input trays on printer 126 are locations on printer 126 that store media (e.g., paper) for printing. Control system 212 may identify an input tray on printer 126 by reading a setting previously stored in memory. In one embodiment, control system 212 identifies the designated input tray by querying printer 126 and receiving feedback that identifies the tray.

In step 306, page generator 214 generates a separator page with a property that directs printer 126 to print the separator page with media from the designated input tray. At this time the separator page is virtual print data. The property of the separator page may direct printer 126 to print from the designated input tray by indicating the tray with an index number or a name.

In step 308, page generator 214 transmits the separator page for printing from the designated input tray. Printer 126 then receives the separator page and prints the separator page from the designated tray. The printed separator page indicates a boundary between one printed job and another.

By printing separator pages from designated input trays on printers, a printer operator knows the media that the separator pages will be printed upon because the printer operator loads this media into the designated trays of the printers. The printer operator can therefore easily identify the boundaries between printed jobs by looking for the media type that was loaded into the input tray designated for separator pages. Also, separator pages that designate a specific media tray (instead of a type of media) can be printed regardless of the media type that is loaded in the designated tray. Thus, the printer can continue printing separator pages even if the media loaded into the designated tray is changed. This allows printer operators to load the designated input tray with scrap paper that may vary in weight, color, or other properties (scrap paper may include misprinted sheets, leftover sheets of paper from other printed jobs, paper with minor physical defects such as miscoloring, etc.). Printing separator pages on scrap paper reduces a print shop's demand for more expensive media.

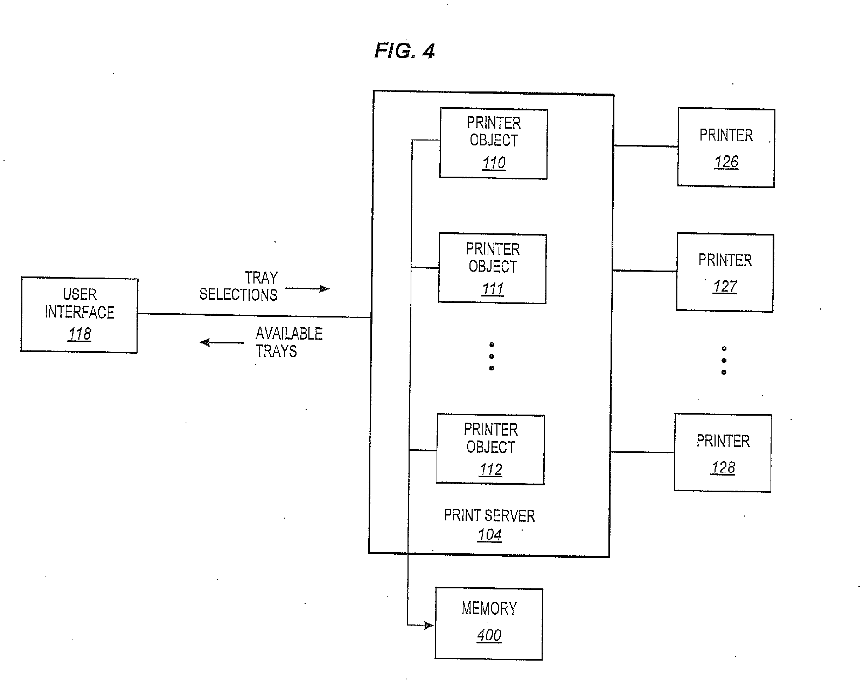

FIG. 4 is a block diagram illustrating a system operable to designate printer input trays used for printing separator pages. In this embodiment, print server 104 initializes to designate input trays for generated separator pages. For each of printers 126-128, print server 104 transmits a query that directs the printer to report trays that are available for printing. Print server 104 then receives information from each printer. The information received describes trays that are available for printing, and may be provided by a printer operator. The information may also indicate the size and configuration of the available trays. Upon receiving this information, print server 104 generates a dialogue presented at user interface 118. The dialogue describes the available trays that may be chosen as input trays for incoming separator pages at each printer. A user then provides feedback to print server 104. The feedback indicates the preferred tray to be used for separator pages for each printer. Print server 104 identifies an input tray for each printer, based upon the input, and stores this information in memory 400, which is accessible by printer objects 110-112.

### Example

In this example, additional processes, systems, and methods are described for generating separator pages having a designated input tray. After the initialization process described above with regard to FIG. 4 is performed, control system 212 of print server 104 is operable to generate separator pages to be printed from a designated input tray on printer 126. Control system 212 receives an incoming print job directed to printer 126, and reads memory 400 to identify the tray on printer 126 that has been designated for separator pages. Control system 212 forwards this information to page generator 214. Page generator 214 waits until it determines that the print job will not be moved to another queue for printing from a different printer (e.g., when the print job reaches the front of the printing queue), and then generates a separator page. The separator page includes a property indicating that it is to be printed with media from the designated input tray. Control system 212 transmits the print job to printer 126, and page generator 214 transmits the separator page to printer 126. The transmission of both the print job and the separator page is coordinated so that the separator page is printed either immediately before or after the printed pages of the job. Printer 126 prints the separator page with media from the designated input tray, and prints the print job according to the media requirements of the print job. In this example, the print job and the separator page are printed with media from different trays.

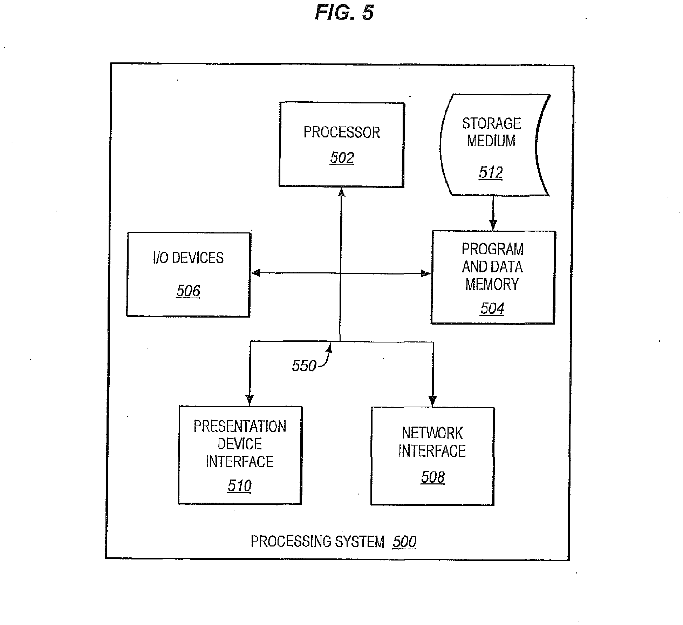

Embodiments disclosed herein can take the form of software, hardware, firmware, or various combinations thereof. In one particular embodiment, software is used to direct a processing system of print server 104 to perform the various operations disclosed herein. FIG. 5 illustrates a processing system operable to execute a computer readable medium embodying programmed instructions to perform desired functions in an exemplary embodiment. Processing system 500 is operable to perform the above operations by executing programmed instructions tangibly embodied on a computer readable storage medium 512. In this regard, embodiments of the invention can take the form of a computer program accessible via the computer-readable medium 512 providing program code for use by a computer or any other instruction execution system. For the purposes of this description, a computer readable storage medium 512 can be anything that can contain or store the program for use by the computer.

The computer readable storage medium 512 can be an electronic, magnetic, optical, electromagnetic, infrared, or semiconductor device. Examples of the computer readable storage medium 512 include a solid state memory, a magnetic tape, a removable computer diskette, a random access memory (RAM), a read-only memory (ROM), a rigid magnetic disk, and an optical disk. Current examples of optical disks include compact disk - read only memory (CD-ROM), compact disk - read/write (CD-RJW), and DVD.

The processing system 500, being suitable for storing and/or executing the program code, includes at least one processor 502 coupled to memory elements 504 through a system bus 550. The memory elements 504 can include local memory employed during actual execution of the program code, bulk storage, and cache memories that provide temporary storage of at least some program code and/or data in order to reduce the number of times the code and/or data are retrieved from bulk storage during execution.

Input/output or I/O devices 506 (including but not limited to keyboards, displays, pointing devices, etc) can be coupled to the system either directly or through intervening I/O controllers. Network adapter interfaces 508 may also be coupled to the system to enable the computer system 500 to become coupled to other data processing systems or storage devices through intervening private or public networks. Modems, cable modems, IBM Channel attachments, SCSI, Fibre Channel, and Ethernet cards are just a few of the currently available types of network or host interface adapters. Presentation device interface 510 may be coupled to the system to interface to one or more presentation devices, such as printing systems and displays for presentation of presentation data generated by processor 502.

Although specific embodiments were described herein, the scope of the invention is not limited to those specific embodiments. The scope of the invention is defined by the following claims and any equivalents thereof.

## Claims

1. A print server that manages one or more printers, wherein the print server comprises:
a control system operable to receive an incoming print job directed to a printer, and to identify an input tray on the printer designated for printing separator pages; and
a page generator operable to generate a separator page with a property that directs the printer to print the separator page with media from the designated input tray, and to transmit the separator page to the printer for printing from the designated input tray.

2. The print server of claim 1, wherein:
the designated input tray has been previously selected by a user, responsive to the control system providing available trays on the printer to the user.

3. The print server of claim 1 or claim 2, wherein:
the control system is further operable to transmit a query to the printer for an identifier indicating the designated input tray.

4. The print server of any one of claims 1 to 3, wherein:
the page generator is further operable to generate the separator page after the print job reaches the front of a print queue for the printer.

5. The print server of any one claims 1 to 4, wherein:
the designated input tray is one of multiple input trays on the printer.

6. A method comprising:
receiving an incoming print job directed to a printer;
identifying an input tray of the printer designated for printing separator pages;
generating a separator page with a property that directs the printer to print the separator page with media from the designated input tray; and
transmitting the separator page to the printer for printing from the designated input tray.

7. The method of claim 6, further comprising:
providing information describing available trays of the printer to a user; and
identifying information from the user indicating one of the available trays as the designated input tray, prior to receiving the incoming print job.

8. The method of claim 6 or claims 7, wherein identifying an input tray comprises:
transmitting a query to the printer for an identifier indicating the designated input tray; and
receiving information from the printer that identifies the designated input tray.

9. The method of claim any one of claims 6 to 8, wherein:
generating the separator page is performed after the print job reaches the front of a print queue for the printer.

10. The method of any one claims 6 to 9, wherein:
the designated input tray is one of multiple input trays on the printer.

11. A system comprising:
a print server according to any one of claims 1 to 5,
wherein the print server is configured to manage one or more printers, the print server being operable to identify input trays on each of the printers that are available for printing, and to determine the input tray on each of the printers that is designated as a media source for separator pages; and
a memory operable to store data that indicates the input tray on each printer designated for separator pages.

12. The system of claim 11, wherein:
the print server is further operable to display the available input trays for each of the printers, to receive input from a user selecting the designated input tray from each of the printers, and to determine the designated input tray on each printer based upon the input received from the user.

13. The system of claim 11, wherein:
the print server is further operable to receive an incoming print job directed to one of the printers, to identify an input tray of the one printer designated for printing separator pages, to generate a separator page with a property that directs the one printer to print the separator page with media from the designated input tray, and to transmit the separator page to the one printer for printing from the designated input tray.

14. The system of any one of claims 11 to 13, wherein the print server is further operable to query each of the printers to identify the input trays that are available.
